# FASCICULE DE BREVET EUROPEEN

(11) **EP 3 719 658 B1**
(45) Date de publication et mention de la délivrance du brevet: **22.01.2025**
(21) Numéro de dépôt: 20167575.8
(22) Date de dépôt: 01.04.2020
(51) Int. Cl.: G06F 13/364

(54) **SYSTÈME SUR PUCE COMPRENANT UNE PLURALITÉ DE RESSOURCES MASTER**
CHIPSYSTEM, DAS EINE VIELZAHL VON MASTER-RESSOURCEN UMFASST
SYSTEM ON A CHIP COMPRISING A PLURALITY OF MASTER RESOURCES

(30) Priorité: 03.04.2019 FR 1903553
(43) Date de publication de la demande: 07.10.2020
(73) Titulaire: THALES, 92400 Courbevoie (FR)
(72) Inventeur: LAMOUR, Pierrick, 33700 MERIGNAC (FR); FINE, Alexandre, 33700 MERIGNAC (FR)
(74) Mandataire: Lavoix

(56) Documents cités:
- US-A1- 2012 042 105
- US-A1- 2013 191 572
- US-A1- 2015 161 065

## Description

La présente invention concerne un système sur puce comprenant une pluralité de ressources master.

Comme son nom l'indique, un système sur puce se présente sous la forme d'un système complet embarqué sur une seule puce. Un tel système est connu également sous le terme anglais « System on Chip » ou abréviation « SoC ».

De manière connue en soi, un tel système sur puce comprend une ou plusieurs ressources master et une ou plusieurs ressources esclaves utilisables par ces ressources master via une pluralité de niveaux d'arbitrage.

Une ressource master correspond notamment à un coeur de calcul ou à un processeur. Dans le cas d'une pluralité de ressources master, l'ensemble de ces ressources sont parfois appelées multi-masters. Une ressource esclave correspond notamment à un périphérique utilisable par une ou chaque ressource master.

Dans les domaines techniques où la sureté de fonctionnement est forte comme par exemple le domaine de l'automobile, de l'aéronautique ou du nucléaire, la notion de déterminisme lors des échanges de données numériques joue un rôle important.

Cette notion permet en particulier de déterminer pour chaque donnée numérique un temps de propagation maximal et de garantir donc qu'une telle donnée sera délivrée d'une ressource à une autre en un temps limité caractérisé par le temps de propagation maximal.

Dans le cas où on fait intervenir des plateformes à base de ressources multi-masters, des problèmes de ralentissement (contentions) apparaissent, notamment lors de l'accès à des périphériques lents. Cela peut se traduire par des durées d'exécution de processus non maitrisées et donc par une perte de déterminisme.

En effet, dans le contexte de multi-masters, chaque périphérique a des spécificités comme par exemple le nombre de niveau d'arbitrage pour y accéder, la vitesse des bus et du média, le type de protocole, etc. Certaines architectures privilégient en outre un accès symétrique et partagé pour l'ensemble des ressources master aux périphériques.

De ce fait, lorsqu'une ressource master souhaite accéder à un périphérique, il doit passer au travers d'un ensemble de bus internes comportant une pluralité de niveaux d'arbitrage.

Ces bus étant cascadés du plus rapide au plus lent, il est possible de venir saturer l'accès à un périphérique dans le cas où la ressource master correspondante dispose d'un bus plus rapide. De plus, chaque périphérique étant connecté par l'intermédiaire de bus à des niveaux d'arbitrage communs, si un périphérique est saturé, par effet de cascade, il sature l'ensemble des niveaux d'arbitrage supérieurs entre ce périphérique et la ressource master qui le sollicite.

En venant saturer un ou plusieurs niveaux d'arbitrage, on vient ralentir l'accès des autres ressources master aux périphériques communs aux niveaux d'arbitrage impactés avec la limitation liée à la vitesse du périphérique le plus lent sollicité dans l'ensemble de la chaine.

Selon des méthodes de l'état de la technique, les problèmes de saturation dans le contexte multi-masters, sont résolus en amont en prenant en compte un pourcentage de contention à rajouter à la durée d'exécution d'un processus mesuré en mono-master.

Toutefois, cette solution n'est pas viable car cela imposerait de caractériser le système précisément et de façon exhaustive pour l'ensemble du domaine d'usage. Comme l'exhaustivité est difficile à prouver, le pourcentage de contention ajouté est, de ce fait, majoré réduisant ainsi la durée allouable aux applications et donc, les performances globales du système sur puce.

On connait par ailleurs un système avec au moins un niveau d'arbitrage décrit dans US 2012/042105 A1. Le document US 2015/161065 décrit lui le préambule de la revendication 1.

La présente invention a pour objet de proposer un système sur puce permettant de résoudre efficacement les problèmes de saturation dans le contexte multi-masters sans dégrader considérablement les performances du système.

À cet effet, l'invention a pour objet un système sur puce conforme à la revendication 1.

Suivant d'autres aspects avantageux de l'invention, le système comprend une ou plusieurs des caractéristiques des revendications 1 à 5.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un système sur puce selon un mode de réalisation de l'invention ; et
- [Fig 2] la figure 2 est une vue schématique d'un système sur puce selon un exemple non revendiqué.

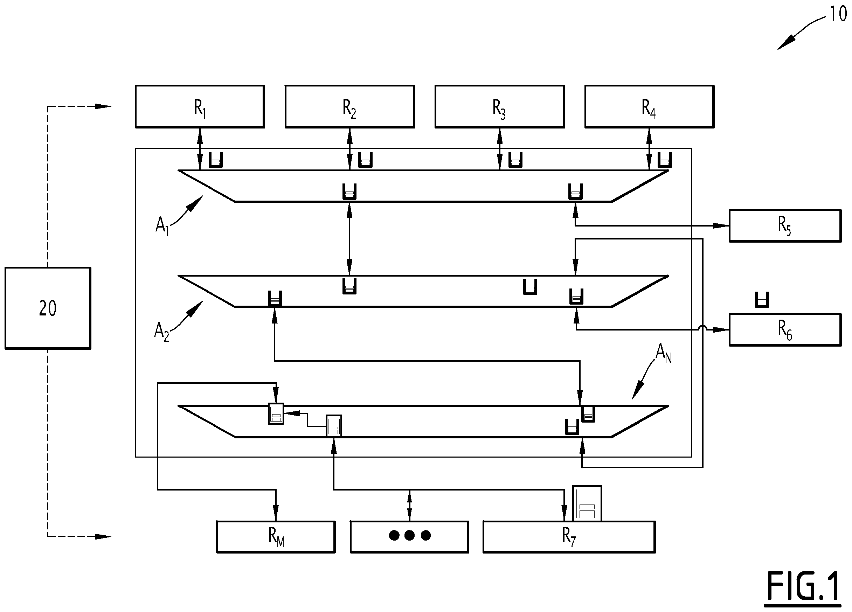

On a en effet illustré sur la figure 1 un système sur puce 10 selon un mode de réalisation de l'invention.

Ce système 10 comprend M ressources R₁,...,R_{M} et N niveaux d'arbitrage A₁,...,A_{N}, les nombres M et N étant strictement supérieurs à 1.

Au moins deux des ressources R₁,...,R_{M}, dites ressources master, sont aptes à interroger au moins deux autres ressources R₁,...,R_{M}, dites alors ressources esclaves, en leur envoyant des requêtes. Les ressources esclaves sont donc aptes à traiter les requêtes reçues de la part des ressources master correspondantes.

L'envoi des requêtes s'effectue selon une bande passante associée à la ressource esclave recevant cette requête et à la ressource master envoyant cette requête.

Une ressource R₁,...,R_{M} peut présenter à la fois une ressource master pour certaines ressources R₁,...,R_{M} ou une ressource esclave pour certaines autres ressources R₁,...,R_{M}, comme cela sera expliqué en détail par la suite.

Ainsi, par exemple, une ressource R₁,...,R_{M} correspondant à un coeur de calcul ou à un processeur graphique est toujours considérée comme ressource master.

En revanche, une ressource R₁,...,R_{M} correspondant à un périphérique ou à une unité d'accès direct à la mémoire appelée unité DMA (de l'anglais « Direct Memory Access ») peut présenter une ressource master pour au moins certaines des ressources R₁,...,R_{M} et une ressource esclave pour certaines autres ressources R₁,...,R_{M}.

Chaque ressource R₁,...,R_{M} est identifiée au sein du système sur puce 10 par un identifiant unique.

Par ailleurs, chaque ressource R₁,...,R_{M} comprend une mémoire tampon apte à stocker des requêtes à traiter et/ou des requêtes à émettre.

Cette mémoire tampon définit une capacité totale de traitement des requêtes par la ressource correspondante et est mise en oeuvre sur la technologie « FIFO » (de l'anglais « First In First Out »).

L'ensemble des niveaux d'arbitrage A₁,...,A_{N} forment une composante appelée dans l'état de la technique par le terme anglais « InterConnect ».

En particulier, chaque niveau d'arbitrage A₁,...,A_{N} se présente par exemple sous la forme d'un ou de plusieurs bus d'accès permettant de contrôler les droits d'accès d'une ressource master à une ressource esclave.

Autrement dit, la transmission des requêtes d'une ressource master à une ressource esclave s'effectue toujours via n niveaux d'arbitrage où le nombre n est supérieur ou égal à 1 et inférieur ou égal à N.

En outre, les niveaux d'arbitrage A₁,...,A_{N} sont distribués de manière hiérarchique ente eux.

Tout comme les ressources R₁,...,R_{M}, chaque niveau d'arbitrage A₁,...,A_{N} comprend une mémoire tampon par lien apte à stocker des requêtes à transmettre au niveau d'arbitrage supérieur et/ou au niveau d'arbitrage inférieur et/ou aux ressources esclaves associés.

Chaque ressource R₁,...,R_{M} est associée à l'un des niveaux d'arbitrage A₁,...,A_{N} et apte à recevoir des requêtes transmises par ce niveau d'arbitrage et/ou à émettre des requêtes vers ce niveau d'arbitrage.

En particulier, chaque niveau d'arbitrage A₁,...,A_{N} est apte à transmettre une requête vers une ressource R₁,...,R_{M} associée à ce niveau d'arbitrage A₁,...,A_{N} lorsque cette requête provient d'une ressource R₁,...,R_{M} associée à ce même niveau d'arbitrage A₁,...,A_{N} ou à un niveau d'arbitrage A₁,...,A_{N} supérieur.

Ainsi, les niveaux d'arbitrage A₁,...,A_{N} définissent la hiérarchie entre les ressources R₁,...,R_{M} et en particulier, la capacité de chaque ressource R₁,...,R_{M} d'être une ressource master ou une ressource esclave par rapport à chaque autre ressource R₁,...,R_{M} du système 10.

Dans l'exemple de la figure 1, les ressources R₁ à R₄ sont associées au niveau d'arbitrage A₁ et présentent des coeurs de calcul. Ces ressources sont donc toujours des ressources master.

La ressource R₅ associée également au niveau d'arbitrage A₁ présente une mémoire cache par exemple de niveau 2. Elle est donc apte à traiter des requêtes provenant des ressources R₁ à R₄ et est considérée par ces ressources R₁ à R₄ comme une ressource esclave.

De manière analogue, la ressource R_{M} associée au niveau d'arbitrage A_{N} et présentant une unité DMA, est considérée comme une ressource master par la ressource R₇ associée au même niveau d'arbitrage A_{N} et présentant un périphérique.

Dans l'ensemble du texte, lorsqu'il est fait mention d'une ressource master, il est convenu que cette ressource est considérée comme une ressource master au moins par une autre ressource. De manière analogue, lorsqu'il est fait mention d'une ressource esclave, il est convenu que cette ressource est considérée comme une ressource esclave au moins par une autre ressource.

Selon l'invention, le système 10 comprend en outre des moyens de contrôle 20 configurés pour contrôler chaque bande passante associée à chaque ressource esclave en fonction de la capacité de cette ressource esclave de traiter les requêtes provenant de la ressource master correspondant à cette bande.

Autrement dit, les moyens de contrôle 20 permettent de contrôler la bande passante vers chaque ressource esclave à partir de chaque ressource master.

Pour ce faire, ces moyens de contrôle 20 se présentent sous la forme d'un contrôleur intégré dans le système sur puce 10, raccordé à chaque ressource master et configuré pour contrôler l'émission des requêtes par chaque ressource master en utilisant l'une des techniques décrites ci-dessous.

En particulier, selon le mode de réalisation de l'invention, chaque ressource esclave est configurée pour allouer pour chaque ressource master une capacité de traitement des requêtes provenant de cette ressource master en fonction de sa capacité totale de traitement des requêtes.

Cette allocation est par exemple effectuée au stade de la conception du système 10 et est par exemple figée lors du fonctionnement du système 10. Elle est par exemple gardée au sein de chaque ressource esclave sous la forme d'un tableau comportant l'identifiant de chaque ressource master avec la capacité de traitement allouée à cette ressource master.

La capacité de traitement allouée à chaque ressource master par une ressource esclave est obtenue par exemple en divisant la capacité totale de traitement des requêtes par cette ressource esclave par le nombre de ressources master susceptibles d'utiliser cette ressource esclave.

Dans ce cas, chaque ressource esclave est apte à envoyer aux moyens de contrôle 20 un signal de remplissage lorsque la capacité de traitement allouée à une ressource master est remplie.

À la réception d'un signal de remplissage, les moyens de contrôle 20 sont aptes à inhiber l'émission de nouvelles requêtes par la ressource master correspondant à ce signal de remplissage.

Autrement dit, selon le mode de réalisation, les moyens de contrôle 20 interdissent l'émission de chaque nouvelle requête par une ressource master vers une ressource esclave lorsque la capacité de traitement allouée par la ressource esclave à cette ressource master est remplie.

Lorsque cette capacité de traitement est rétablie, la ressource esclave est apte par exemple à envoyer un signal correspondant vers les moyens de contrôle 20 qui lèvent l'interdiction de l'émission des requêtes par la ressource master correspondante.

Selon un exemple non-revendiqué, les moyens de contrôle 20 sont aptes à définir pour chaque ressource master une cadence maximale d'émission des requêtes destinées à chaque ressource esclave.

Ces cadences maximales d'émission sont définies par exemple au stade de la conception du système 10 en fonction des bandes passantes des différents niveaux d'arbitrage et des ressources master, des capacités de traitement par les ressources esclaves ainsi que du nombre de ces éléments.

Ainsi, les cadences maximales d'émission pour chaque ressource master vis-à-vis de chaque ressource esclave sont par exemple gardées sous la forme d'un tableau par les moyens de contrôle 20 et sont par exemple figées lors du fonctionnement du système 10.

Selon cet exemple, les moyens de contrôle 20 inhibent l'émission des requêtes par une ressource master vers une ressource esclave lorsque la cadence de leur émission dépasse la cadence maximale d'émission définie pour cette ressource master et cette ressource esclave.

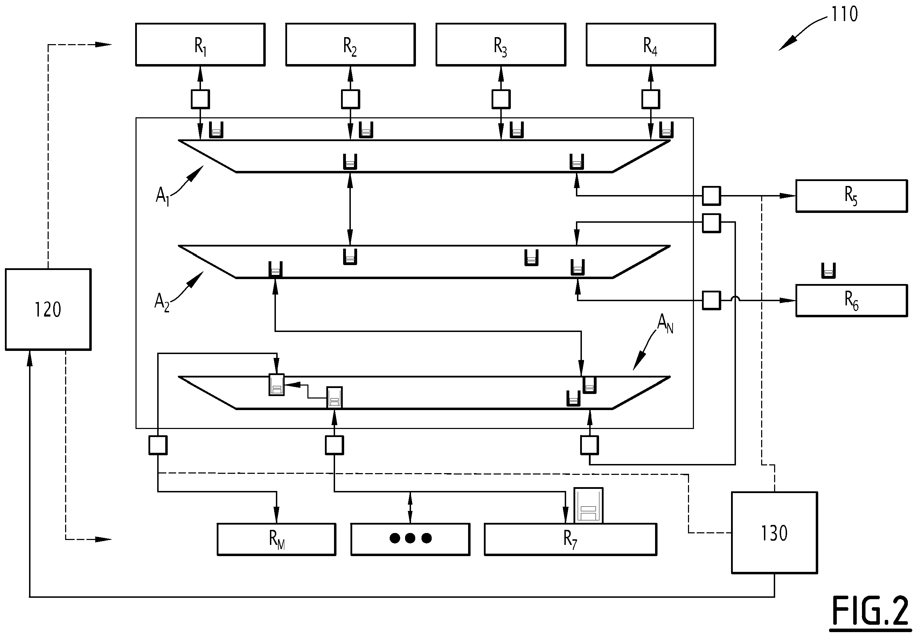

La figure 2 présente un système sur puce 110 selon un autre exemple non revendiqué.

Ce système 110 est analogue au système 10 décrit en référence à la figure 1 et comprend comme dans le cas précédent M ressources R₁,...,R_{M} et N niveaux d'arbitrage A₁,...,A_{N} analogue à ceux décris précédemment.

Ce système 110 comprend également des moyens de contrôle 120 configurés pour contrôler chaque bande passante associée à chaque ressource esclave en fonction de la capacité de cette ressource esclave de traiter les requêtes provenant de la ressource master correspondant à cette bande passante.

Le système 110 selon cet exemple comprend en outre des moyens de synchronisation 130.

Ces moyens de synchronisation 130 sont aptes à détecter la sortie de l'ensemble des niveaux d'arbitrage A₁,...,A_{N} correspondants de chaque requête issue d'une ressource master et destinée à une ressource esclave.

Pour ce faire, les moyens de synchronisation 130 définissent par exemple un observateur d'entrée à chaque entrée de chacun des niveaux d'arbitrage A₁,...,A_{N} et un observateur de sortie à chaque sortie de chacun des niveaux d'arbitrage A₁,...,A_{N}.

Lorsqu'un observateur de sortie détecte une requête détectée préalablement par un observateur d'entrée, les moyens de synchronisation 130 concluent que la requête correspondante est sortie de l'ensemble des niveaux d'arbitrage A₁,...,A_{N} et est donc consommée par la ressource esclave de destination.

Dans ce cas, les moyens de contrôle 120 sont aptes à autoriser l'émission d'une nouvelle requête par une ressource master vers une ressource esclave uniquement lorsque les moyens de synchronisation 130 détectent la sortie de l'ensemble des niveaux d'arbitrage A₁,...,A_{N} correspondants d'une requête précédente issue de cette ressource master et destinée à cette ressource esclave.

On conçoit alors que la présente invention présente un certain nombre d'avantages.

En particulier, le contrôle de l'émission de requêtes par chaque ressource master vers une ressource esclave selon le mode de réalisation de l'invention permet d'éviter la saturation à l'entrée de cette ressource esclave. Cela diminue ainsi la probabilité de saturation des niveaux d'arbitrage menant à cette ressource esclave.

Dans le premier exemple décrit, la probabilité de saturation des niveaux d'arbitrage est diminuée car les cadences maximales définies pour chaque ressource master prennent en compte les bandes passantes de chacun des éléments utilisés pour transmettre les requêtes ainsi que les capacités de traitement de ces requêtes par les ressources esclaves.

Enfin, dans le deuxième exemple décrit, la saturation des niveaux d'arbitrage est pratiquement exclue en synchronisant les entrées et les sorties des requêtes.

Ainsi, le mode de réalisation de l'invention ainsi que les deux exemples décrits permettent de résoudre les problèmes liés au non-déterminisme temporel d'exécution des systèmes sur puce dans le contexte multi-masters.

Bien entendu, il est possible de prévoir d'autres modes de réalisation qui correspondent aux combinaisons du mode de réalisation avec un ou deux des exemples décrits ci-dessus.

## Revendications

1. Système sur puce (10 ; 110) comprenant :
- une pluralité de ressources master ;
- une pluralité de ressources esclaves ;
- une pluralité de niveaux d'arbitrages (A₁,...,A_{N}), chaque niveau d'arbitrage (A₁,... ,A_{N}) étant apte à contrôler l'accès d'au moins une ressource master à au moins une ressource esclave, la pluralité des niveaux d'arbitrage (A₁,... ,A_{N}) étant distribuées de manière hiérarchique entre eux ;
chaque ressource master étant apte à envoyer des requêtes vers au moins une ressource esclave selon une bande passante associée à cette ressource esclave et à cette ressource master, chaque requête transmettant des données numériques ou interrogeant la ressource esclave correspondante, et étant transmise via au moins un niveau d'arbitrage (A₁,...,A_{N}) ;
le système (10 ; 110) comprenant en outre des moyens de contrôle (20 ; 120) configurés pour contrôler chaque bande passante associée à chaque ressource esclave en fonction de la capacité de cette ressource esclave à traiter les requêtes provenant de la ressource master correspondant à cette bande passante ;
chaque ressource esclave comprenant une mémoire tampon apte à stocker des requêtes à traiter par cette ressource esclave et définissant une capacité totale de traitement des requêtes ;
chaque ressource esclave étant apte à allouer pour chaque ressource master une capacité de traitement des requêtes provenant de cette ressource master en fonction de sa capacité totale de traitement des requêtes ;
le système étant **caractérisé en ce que** chaque ressource esclave est apte à envoyer aux moyens de contrôle un signal de remplissage lorsque la capacité de traitement allouée à une ressource master est remplie.

2. Système (10 ; 110) selon la revendication 1, dans lequel la capacité de traitement allouée à chaque ressource master par une ressource esclave est obtenue en divisant la capacité totale de traitement des requêtes par cette ressource esclave par le nombre de ressources master susceptibles d'utiliser cette ressource esclave.

3. Système (10 ; 110) selon la revendication 1 ou 2, dans lequel à la réception d'un signal de remplissage, les moyens de contrôle (20 ; 120) sont aptes à inhiber l'émission de nouvelles requêtes par la ressource master correspondant à ce signal de remplissage.

4. Système (10 ; 110) selon l'une quelconque des revendications précédentes, dans lequel chaque ressource master est choisie dans un groupe comprenant :
- coeur de calcul ;
- processeur graphique ;
- unité d'accès direct à la mémoire.

5. Système (10 ; 110) selon l'une quelconque des revendications précédentes, dans lequel la ressource esclave est un périphérique.

## Patentansprüche

1. System-on-Chip (10; 110), umfassend:
- eine Vielzahl von Master-Ressourcen;
- eine Vielzahl von Slave-Ressourcen;
- eine Vielzahl von Arbitrierungsebenen (A₁,...,A_{N}), wobei jede Arbitrierungsebene (A₁,...,A_{N}) geeignet ist, um den Zugriff von mindestens einer Master-Ressource auf mindestens eine Slave-Ressource zu steuern, wobei die Vielzahl von Arbitrierungsebenen (A₁,...,A_{N}) hierarchisch untereinander verteilt sind;
wobei jede Master-Ressource geeignet ist, um Anfragen an mindestens eine Slave-Ressource gemäß einer mit dieser Slave-Ressource und dieser Master-Ressource assoziierten Bandbreite zu senden, wobei jede Anfrage digitale Daten überträgt oder die entsprechende Slave-Ressource abfragt und über mindestens eine Arbitrierungsebene (A₁,...,A_{N}) übertragen wird;
das System (10; 110)
ferner umfassend
Steuereinrichtungen (20; 120), die konfiguriert sind, um jede mit jeder Slave-Ressource assoziierte Bandbreite abhängig von der Fähigkeit dieser Slave-Ressource, Anfragen aus der Master-Ressource zu verarbeiten, die dieser Bandbreite entsprechen, zu steuern;
wobei jede Slave-Ressource einen Pufferspeicher umfasst, der Anfragen speichern kann, die von dieser Slave-Ressource verarbeitet werden sollen, und der eine Gesamtkapazität für die Verarbeitung der Anfragen definiert;
wobei jede Slave-Ressource geeignet ist, für jede Master-Ressource eine Kapazität zur Verarbeitung der von dieser Master-Ressource stammenden Anfragen abhängig von ihrer Gesamtkapazität zur Verarbeitung von Anfragen zuzuweisen;
wobei das System **dadurch gekennzeichnet ist, dass** jede Slave-Ressource geeignet ist, um an die Steuereinrichtungen ein
Füllsignal zu senden, wenn die einer Master-Ressource zugewiesene Verarbeitungskapazität gefüllt ist.

2. System (10; 110) nach Anspruch 1, wobei die Verarbeitungskapazität, die jeder Master-Ressource durch eine Slave-Ressource zugewiesen wird, dadurch erlangt wird, dass die Gesamtkapazität zum Verarbeiten von Anfragen durch diese Slave-Ressource durch die Anzahl der Master-Ressourcen, die diese Slave-Ressource verwenden können, dividiert wird.

3. System (10; 110) nach Anspruch 1 oder 2, wobei bei Empfang eines Füllsignals die Steuereinrichtungen (20; 120) geeignet sind, um die Ausgabe neuer Anfragen durch die Master-Ressource, die diesem Füllsignal entspricht, zu verhindern.

4. System (10; 110) nach einem der vorherigen Ansprüche, wobei jede Master-Ressource ausgewählt ist aus einer Gruppe, umfassend:
- Rechenkern;
- Grafikprozessor;
- Einheit für den direkten Zugriff auf den Speicher.

5. System (10; 110) nach einem der vorherigen Ansprüche, wobei die Slave-Ressource ein Peripheriegerät ist.

## Claims

1. System on chip (10; 110) comprising:
- a plurality of master resources;
- a plurality of slave resources;
- a plurality of arbitration levels (A₁, ..., A_{N}), each arbitration level (A₁, ..., A_{N}) being able to control the access of at least one master resource to at least one slave resource, the plurality of arbitration levels (A₁, ..., A_{N}) being distributed in hierarchic way between them;
each master resource being able to send requests to at least one slave resource according to a bandwidth associated with this slave resource and this master resource, each request transmitting digital data or interrogating the corresponding slave resource, and being transmitted via at least one arbitration level (A₁, ..., A_{N});
the system (10; 110) further comprising control means (20; 120) configured to control each bandwidth associated with each slave resource as a function of the capacity of this slave resource to process requests from the master resource corresponding to this bandwidth;
each slave resource comprising a buffer memory capable of storing requests to be processed by this slave resource and defining a total capacity for processing requests;
each slave resource being able to allocate for each master resource a capacity for processing requests from this master resource as a function of its total capacity for processing requests;
the system being **characterized in that** each slave resource est able to send to the control means a full signal when the processing capacity allocated to a master resource is full.

2. System (10; 110) according to claim 1, wherein the processing capacity allocated to each master resource by a slave resource is obtained by dividing the total capacity for processing requests by this slave resource, by the number of master resources capable to use this slave resource.

3. System (10; 110) according to claim 1 or 2, wherein, upon reception of a full signal, the control means (20; 120) are capable of inhibiting the emission of new requests by the master resource corresponding to this full signal.

4. System (10; 110) according to any one of the preceding claims, wherein each master resource is chosen from a group comprising:
- a computing core;
- a graphics processor;
- a direct memory access unit.

5. System (10; 110) according to any one of the preceding claims, wherein the slave resource is a peripheral.
